# DEMANDE DE BREVET EUROPEEN

(11) **EP 3 031 327 A1**
(43) Date de publication de la demande: **15.06.2016**
(21) Numéro de dépôt: 15171667.7
(22) Date de dépôt: 11.06.2015
(51) Int. Cl.: A01N 65/06, A01N 65/24, A01N 65/08, A01P 17/00

(54) **MELANGE REPULSIF CONTRE LES TIQUES**

(30) Priorité: 10.12.2014 CH 19092014
(71) Demandeur: Blum, Charles, 2944 Bonfol (CH)
(72) Inventeur: BLUM, Charles, 2944 Bonfol (CH); BLUM, Reynald, 2944 Bonfol (CH)
(74) Mandataire: P&TS SA (AG, Ltd.)

(57) **Abrégé**

Mélange répulsif contre les tiques, comportant un solvant optionnel et un produit actif, ledit produit actif comportant au moins 33% de mélange d'huile de thuya, d'huile de géranium et d'huile de feuille de cannelle et/ou d'essence de cannelle.

## Description

### Domaine technique

La présente invention concerne un mélange répulsif contre les tiques

### Etat de la technique

Les nuisances et maladies causées par les tiques sont bien connues. Ces parasites de l'homme et de nombreux mammifères y compris les chiens, les chats etc propagent notamment la maladie de Lyme et l'encéphalite. La maladie de Lyme peut uniquement se traiter si elle est détectée à temps. L'encéphalite à tiques ne peut pas se traiter.

Il est donc nécessaire d'éviter autant que possible les piqures de tiques dans les régions où ces parasites abondent. Dans ce but, on emploie le plus souvent des produits répulsifs à base de DEET (N,N-diéthyl-3-méthylbenzamide). Ces préparations sont efficaces, mais déclenchent cependant des allergies chez certaines personnes. En outre, elles ne doivent pas être utilisées sur les nouveau-nés ni sur les femmes enceintes. Sa pulvérisation sur les muqueuses ou dans les yeux présente en outre un risque sanitaire. Le DEET est en outre connu pour réduire l'efficacité des crèmes solaires appliquées simultanément.

Afin d'éviter ces multiples inconvénients, il existe un besoin pour des mélanges répulsifs anti-tiques qui soient dépourvus de DDET. En particulier, les personnes allergiques au DEET et exposées à un risque élevé de piqures de tiques, ou allergiques aux tiques, ont impérativement besoin d'un traitement préventif de la peau sans DEET qui évite le risque de maladies ou d'allergies liées aux tiques.

Dans ce but, on connait notamment les effets insectifuges de nombreuses huiles essentielles qui ont été utilisées pour repousser les parasites.

US2013196006 décrit un insectifuge à base d'huile essentielle d'eucalyptus, de citronelle et de pin, et d'huiles essentielles secondaires en option.

US2008193387 décrit une composition avec un mélange de un à six huiles essentielles, y compris de l'huile de pétrole de Lippia javanica, utilisée pour repousser les ectoparasites.

DE202004014465U U1 décrit un insectifuge anti-tique et anti-moustique basé sur une huile essentielle avec de la beta-cyclodextrine.

WO2004010783 décrit un insectifuge basé sur une ou plusieurs huiles essentielles, y compris des mélanges d'huile de Backhousia citriodora et d'huile de melaleuca ericafolia

WO2013050967 décrit un pesticide à base d'huile naturelle et de solvant aromatique polaire pour lutter contre divers parasites, y compris les puces de lit, les moustiques, les tiques, les poux etc. L'huile naturelle peut être de l'huile de margousier, de l'huile de girofle, de l'essence de menthe poivrée, de l'essence de cannelle, de l'essence de thym, de l'huile d'origan, de l'huile d'ail, de l'essence d'anis, de l'huile de géranium, de l'huile de citron vert, ou de l'huile de lavande. Une longue liste d'additifs qui peuvent être ajoutés est en outre proposée.

US2013084347 concerne un mélange sans alcool contre les tiques. Ce document suggère un mélange de plusieurs types d'huiles essentielles tels que l'huile de citronnelle, d'eucalyptus de citron, de rose géranium, de litsea cubeba pour obtenir un effet répulsif plus grand.

WO14063109 concerne un mélange à base d'huiles essentielles, y compris du géraniol, pour combattre les arthropodes. La combinaison de différents types d'huiles essentielles donne un effet synergique sur les arthropodes.

Ces produits répulsifs à base d'huiles essentielles évitent certains des inconvénients des mélanges à base de DDET, mais n'ont en général pas une efficacité aussi élevée contre les tiques.

### Bref résumé de l'invention

Un but de la présente invention est donc de proposer un nouveau produit répulsif efficace contre les tiques mais qui évite au moins certains des inconvénients des mélanges usuels à base de DEET.

Selon l'invention, ces buts sont atteints notamment au moyen d'un mélange répulsif contre les tiques, comportant un solvant optionnel et un produit actif, ledit produit actif comportant au moins 30% de mélange d'huile de thuya, dhuile de géranium et d'huile de feuille de cannelle et/ou d'essence de cannelle.

Dans un mode de réalisation préférentiel, le produit actif comporte au moins 50% de mélange d'huile de thuya, d'huile de géranium et d'huile de feuille de cannelle et/ou d'essence de cannelle. Une efficacité encore accrue est obtenue avec un produit actif comprenant au moins 66% de ce mélange.

Des tests ont montré que, de manière surprenante, ce mélange répulsif présente une efficacité anti-tique remarquable, nettement supérieure à l'efficacité des produits anti-tiques connus à base d'huiles essentiels, et du même ordre de grandeur que l'efficacité des produits à base de DEET.

L'application sur la peau d'huile de thuya et d'huile de cannelle est connue, notamment à partir de WO09138487. L'huile de thuya est souvent utilisée en voie externe sur la peau pour faire disparaître des verrues ou comme huile essentielle cicatrisante. L'huile de cannelle est utilisée pour les messages et parfois aussi recommandée contre les verrues.

L'efficacité d'un mélange à haute concentration de ces huiles contre les tiques est en revanche inattendue.

Les vertus de l'huile de géranium d'Egypte en cas de problèmes de peau, notamment de mycoses, d'eczéma, d'acné etc sont connus. Ses effets antibactériens ou comme huile essentielle hémostatique ont aussi été décrits.

De manière surprenante, il a été observé que l'huile de géranium, en particulier l'huile de géranium d'Egypte, utilisée en combinaison avec l'huile de Thuya et avec l'huile de feuille de cannelle et/ou d'essence de cannelle renforce les vertus de ce mélange comme insectifuge anti-tiques, tout en réduisant sa toxicité.

Les huiles essentielles constituant le produit actif sont avantageusement des huiles volatiles.

Le mélange peut être appliqué au moyen d'un aérosol sous pression, ou d'émulsions dans l'eau, sous forme de crèmes, de gels, de lotions etc.

Des exemples de mise en oeuvre de l'invention sont indiqués à titre d'exemple dans la description qui suit.

Dans ce mode de réalisation, le mélange répulsif contre les tiques comporte un solvant, par exemple un solvant à base d'eau, par exemple de l'eau et/ou une émulsion ou un gel à base d'eau, ou un solvant à base d'alcool, de savon etc, ainsi qu'un produit actif à base d'huiles volatiles.

Le produit actif comporte au moins 33% mais de préférence au moins 50%, de préférence au moins 66%, par exemple 100%, de mélange d'huile de thuya et d'huile de feuille de cannelle et/ou d'essence de cannelle.

Le produit actif peut comporter d'autres huiles essentielles en plus de l'huile de thuya et de l'huile de feuille de cannelle et/ou d'essence de cannelle. Des essais particulièrement concluants ont été obtenus en ajoutant de l'huile de géranium, par exemple de l'huile de géranium d'Egypte. Cet ajout permet en outre de réduire la quantité d'huile de thuya nécessaire, et permet de rendre le mélange moins allergène pour certains patients.

Le produit actif peut ainsi être composé exclusivement d'huiles volatiles. Il peut ainsi être aisément appliqué sur de larges surfaces de la peau au moyen d'un aérosol par exemple, ou sous forme de lotion ou de gel.

Des tests concluants ont été effectués avec des concentrations de produit sur la peau supérieure à 60 microgrammes par centimètre carrés, par exemple 90 microgrammes par centimètre carré de peau. On évitera cependant des concentrations supérieures à 120 microgrammes par centimètre carré en raison de la nocivité de l'huile du thuya en cas d'inhalation, et du risque d'allergie pour certaines personnes.

La table 1 ci-dessous montre le résultat de tests effectués sur des plaques en verre chauffées à la température de la peau humaine (34° C). Plusieurs séries d'essais avec 12 tiques par série ont été effectuées. A chaque essai, on a compté le nombre de tiques affectées, c'est-à-dire celles qui sont tombées ou qui se sont déplacées vers le bas, et celles qui ne sont pas affectées, c'est-à-dire qui sont restées où ont eu un autre comportement. Les essais ont été effectués avec un insectifuge de référence à base de DEET, puis avec un mélange à base d'huile de thuya et d'huile de feuille de cannelle et/ou d'essence de cannelle en basse concentration (30 µg/cm², soit 15 µg/cm² de chaque produit), en haute concentration (60 µg/cm², soit 30 µg/cm² de chaque produit), puis en ajoutant de l'huile de géranium d'Egypte à haute concentration (90 µg/cm² pour le mélange total, soit 30 µg/cm² de chaque produit). Dans les trois mélanges, les proportions de chaque composant sont égales.

| | Nombre de tiques par essai | DEET 30µg/cm² | Thuya + cannelle 30 µg/cm² | Thuya + cannelle 60 µg/cm² | Thuya + cannelle + géranium 30 µg/cm² |
|---|---|---|---|---|---|
| Marchées vers le bas | 12 | 0 | 1.7 | 0.3 | 1 |
| Tombées | 12 | 12 | 6.3 | 11.7 | 11.0 |
| Restées | 12 | 0 | 0 | 0 | 0 |
| Affectées | | 12 | 8 | 12 | 12.0 |
| Non affectées | | 0 | 1.7 | 0 | 0 |
| Autres comportements | | | 2.3 | 0 | 0 |

On constate donc que, de manière surprenante, le mélange 3 (huile de thuya et huile de cannelle avec une concentration de 60 µg/cm²), et de manière pratiquement équivalente le mélange 4 (huile de thuya, huile de cannelle et huile de géranium d'Egypte avec une concentration de 60 µg/cm²) ont une efficacité répulsive pratiquement équivalente à celle du produit conventionnel à base de DEET : tous les tiques sont affectés, soit en tombant, soit en se déplaçant vers le bas. Le mélange à basse concentration (15 µg/cm² de chaque produit) n'a montré qu'un effet répulsif modéré.

Le produit est adapté aussi bien au traitement de la peau humaine que d'animaux domestiques tels que chiens, chats, moutons, bovins.

## Revendications

1. Mélange répulsif contre les tiques, comportant un solvant optionnel et un produit actif, ledit produit actif comportant au moins 33% de mélange d'huile de thuya, d'huile de géranium et d'huile de feuille de cannelle et/ou d'essence de cannelle.

2. Mélange répulsif selon la revendication 1, ledit produit actif comportant au moins 50% dudit mélange d'huile de thuya, d'huile de géranium et d'huile de feuille de cannelle et/ou d'essence de cannelle.

3. Mélange répulsif selon la revendication 2, ledit produit actif comportant au moins 66% dudit mélange d'huile de thuya, d'huile de géranium et d'huile de feuille de cannelle et/ou d'essence de cannelle.

4. Mélange répulsif selon l'une des revendications 1 à 3, ladite huile de géranium étant une huile de géranium d'Egypte.

5. Mélange répulsif selon l'une des revendications 1 à 4, ledit produit actif étant composé exclusivement d'huiles volatiles.

6. Mélange répulsif selon l'une des revendications 1 à 5, destiné à une application au moyen d'un aérosol.

7. Mélange répulsif selon l'une des revendications 1 à 5, sous forme d'émulsion sous forme de crème, gel ou lotion.

8. Mélange répulsif selon l'une des revendications 1 à 7, ledit solvant étant à base d'eau.

9. Procédé de traitement de la peau pour repousser les tiques, comportant l'application d'un mélange selon l'une des revendications 1 à 8 avec une concentration supérieure à 60 microgrammes de produit actif par cm2 de peau.

10. Utilisation du mélange selon l'une des revendications 1 à 8 pour le traitement répulsif contre les tiques, en application sur la peau avec une concentration supérieure à 60 microgrammes de produit actif par cm2 de peau.
